# EUROPEAN PATENT APPLICATION

(11) **EP 1 895 643 A1**
(43) Date of publication of application: **05.03.2008**
(21) Application number: 06747049.2
(22) Date of filing: 31.05.2006
(51) Int. Cl.: H02K 15/12, H02K 3/34

(54) **ELECTRIC MOTOR, METHOD OF PRODUCING STATOR, AND METHOD OF PRODUCING ELECTRIC MOTOR**

(30) Priority: 31.05.2005 JP 2005159351
(71) Applicant: Mitsuba Corporation, Kiryu-shi, Gunma 376-8555 (JP)
(72) Inventor: MACHIDA, Eiichi c/o MITSUBA Corporation, Kiryu-shi Gunma-ken (JP); YAMAZAKI, Takeshi c/o MITSUBA Corporation, Kiryu-shi Gunma-ken (JP); IKENO, Hirotatsu c/o MITSUBA Corporation, Kiryu-shi Gunma-ken (JP)
(74) Representative: Ungerer, Olaf
(86) International application number: PCT/JP2006/310895
(87) International publication number: WO 2006/129723

(57) **Abstract**

Brushless motor (1) which is an electric motor, is provided with a stator unit (3) inserted in and engaged with case (2). A part of the coating material (21) for coating the coil (17) of the stator unit (3) enters the receiving part (13) formed in the bottom part (2B) of the case (2); and the bottom part (2B) of the case (2) and the coil (17) are linked by this coating material (21). While coating, the coating material (21) is dripped from the opening side of the case (2) with the stator unit (3) in the inserted condition in the case (2).

## Description

### [Technical field]

The present invention relates to electric motor, production method of stator constituting electric motor, and production method of electric motor.
This application claims priority over Japanese Patent Application No. 2005-159351, filed May 31, 2005, the contents of which are incorporated herein by reference.

### [Background art]

An electric motor, for example, may include a stator contained in a stator unit within a closed end cylindrically-shaped case and a rotor. The stator unit has a stator core made of magnetic material, and coils are formed by windings wound on the toothed parts of the stator core. The stator unit touches only the cylindrical part of the case, and the rotor is pivotably supported on the bottom part of the case (for example, refer to patent document 1). Furthermore, in this type of electric motor, in order to protect the stator coil and to prevent variation in the coil windings, the coating material may be dripped from above for coating the coil after forming it. To assemble such an electric motor, the coating material is dripped on the coil of the stator unit, and the stator unit is inserted by press fitting into the case after the coating material cures.
[Patent document 1] Japanese Unexamined' Patent Application, First Publication No. H9-182403

### [Disclosure of the invention]

### [Problem to be solved by the invention]

A large quantity of coating material has to be dripped so that the coating material adequately permeates to the internal parts of the coil. However, excess coating material generated at this stage may accumulate at bottom of the coil. For this reason, the problem that occurred was that when the coating material cured, a lump of excess coating material was formed under the coil. Such a lump obstructed the insertion by press fitting of the stator unit into the case and it had to be cut and removed, resulting in increased man-hours. Moreover, in automated production lines, equipment was necessary for cutting out and removing the lump formed from the excess coating material, which resulted in an increase in production cost. Also, another problem was that the cut and removed coating material could not be re-used; it had to be treated as waste.
The present invention has the main object of eliminating the complexities of treatment accompanying the coating of coil, considering the circumstances mentioned above.

### [Means to be solve the problems]

The first aspect related to the present invention for solving the problems mentioned above is an electric motor included with a stator contained in a case that closes one end of the circular-shaped side part of a stator unit having a coil wound on a stator core by an end part, and a rotor rotatively supported in the case, wherein the end part comprises a receiving part for receiving excess coating material covering the coil.
In this electric motor, the excess coating material generated when the coil is covered by coating material, is contained in the receiving part of the case. The result is that the excess coating material remains in the case and need not be removed.

The second aspect related to the present invention is the electric motor related to the first aspect of the invention mentioned above wherein the coil is fixed to the end part through the coating material in the receiving part.
The excess coating material contained in the receiving part in this electric motor links the stator unit and the end part of the case. The result is that vibration-resistant characteristics of the end part are improved.

The third aspect of the invention related to the present invention is the production method of stator of electric motor included with a stator contained in a case that closes one end of the circular-shaped side part of a stator unit having a coil wound on a stator core by an end part, and a rotor rotatively supported in the case, wherein after accommodating the stator unit in the case, coating material is supplied to cover the coil; and after collecting the excess coating material in the receiving part included in the end part of the case, the coating material is cured.
In this production method of stator, coating material is supplied to the stator unit contained in the case, so the excess coating material collects in the receiving part of the case: If the coating material is cured in this condition, the excess coating material cures within the receiving part and remains in the case.

The fourth aspect related to the present invention is that after the production of the stator according to the production method of the stator according to the third aspect of the invention mentioned above, the rotor is inserted in the stator, and the rotor is rotatively supported by a bracket covering the opening of the case and by the case.
According to the production method of this electric motor, the rotor is assembled in the stator with the excess coating material contained as-is in the receiving part of the case, and the electric motor is produced.

### [Effects of the invention]

According to the present invention, a receiving part that can receive the coating material' in the case is formed so that the electric motor can be assembled in a condition where excess coating material generated when coating the coil is contained in the receiving part. For this reason, the excess coating material need not be cut out and removed, so man-hours are reduced, and the excess coating material that was cut out and removed conventionally need not be treated as waste. Also, by linking the end part of the case with the stator unit using the coating material contained in the receiving part, the strength of the bottom part can be enhanced, and the performance of the product can be improved by producing the case of smaller thickness.

### [Brief description of drawings]

[FIG. 1] FIG. 1 is a cross-sectional view showing the configuration of electric motor related to the embodiment of the present invention.
[FIG. 2] FIG. 2 shows the view in the direction of the arrow A in FIG. 1.
[FIG. 3] FIG. 3 is a cross-sectional view that explains the process for coating the coil.

### [Explanation of reference numerals]

- 1: Brushless motor (electric motor)
- 2: Case
- 2B: Bottom part (end part)
- 2D: Opening
- 3: Stator unit
- 5: Bracket
- 6: Rotor
- 13: Receiving unit
- 15: Stator core
- 21: Coating material

### [Best mode for carrying out the invention]

The best mode for carrying out the invention is described here in detail referring to the drawings.

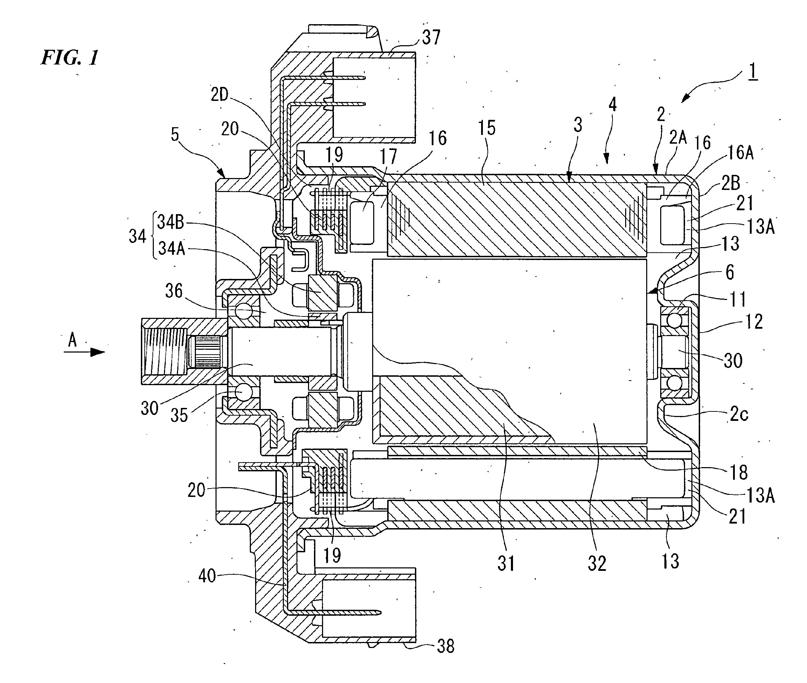

FIG. 1 shows the configuration of brushless motor, which is an electric motor related to the present embodiment. Brushless motor 1 is provided with a stator 4 inserted by press fitting into stator unit 3 in case 2, a bracket 5 for securing the case 2, and a rotor 6 rotatively supported by the case 2 and the bracket 5.

The case 2 has a circular shaped side part 2A, and a bottom part 2B, which is the end part closing one of the ends of the side part 2A; overall, it has a closed end cylindrical shape. The bottom part 2B has an annular groove 2C formed by plastic deformation surrounding the central part in the axial direction facing the inside of the case 2. A retaining part 12 for inserting a bearing 11 by press fitting into the center of the bottom part 2B is formed by the groove 2C, and a receiving part 13 in annular shape is formed surrounding the retaining part 12 at the peripheral edge of the bottom part 2B.

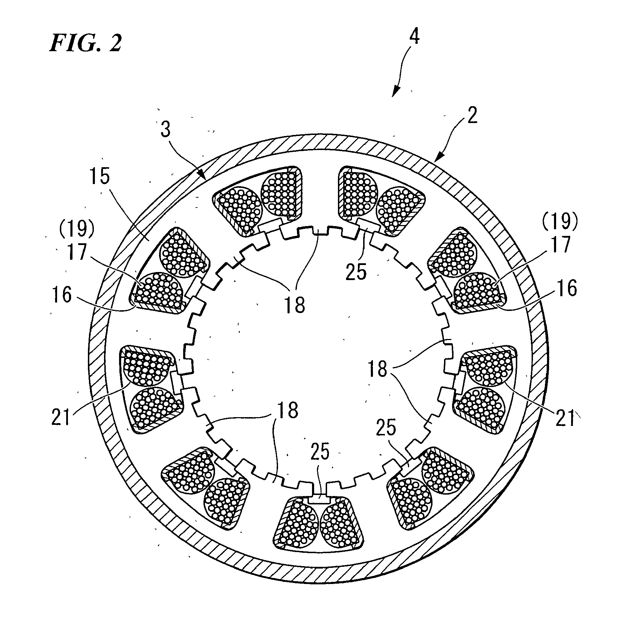

The stator unit 3 is provided with a stator core 15 made of magnetic material, and a coil 17 formed on the periphery of insulator 16, which is an insulator. The winding 19 of coil 17 is connected to terminal 20 fixed to the side of opening 2D of case 2. Also, as shown in FIG. 2, the stator core 15 has an annular-shaped part in contact with and pressing against the inside of case 2. From the inner peripheral side of this annular-shaped part, multiple toothed parts 18 are installed at equal intervals facing the axial line. The insulator 16 is attached to the stator core 15 so as to cover the toothed parts 18. The coil 17 is formed by the winding 19 wound over the periphery of the insulator 16. Furthermore, wedge 25 made of insulating material, is inserted in the opening formed in the inner periphery of the adjacent toothed parts 18. The opening in the inner periphery formed by the toothed parts 18 is closed by this wedge 25.

As shown in FIG. 1, one of the ends 16A of the insulator 16 extends toward the axial direction of the brushless motor 1 and butts against the bottom part 2B of the case 2.
Also, the periphery of the coil 17 is covered by the coating material 21. Varnish, epoxy, and the like can be used as the coating material 21, for example. As shown in FIG. 1, a part of this coating material 21 has entered the receiving part 13 of the bottom part 2C of case 2 and the space 13A formed by the end 16A of the insulator 16, the coil 17 and the bottom part 2B, and has adhered to the bottom part 2B.

As shown in FIG. 1, the rotor 6 has a rotating shaft 30 extending in the axial direction Permanent magnets 31 are fixed such that the magnetic poles are alternately disposed in the circumferential direction on the outer periphery of the rotating shaft 30. Furthermore, a magnet cover 32 is attached so as to cover the outside of the permanent magnet 31.
One end of the rotating shaft 30 is rotatively supported by bearing 11 inserted by press fitting inside the retaining part 12 of the bottom part 2B of case 2. On the other end side of the rotating shaft 30, a resolver rotor 34A of resolver 34 for detecting the position of rotation of rotor 6, is fitted. Also, the other end side of the rotating shaft 30 is rotatively supported by bearing 35. This bearing 35 is inserted by press fitting inside bracket 5, which is fixed so as to cover the opening 2D of case 2.

The bracket 5 has a disk shape with a support hole 36 penetrating its center along the axial direction into which bearing 35 is inserted by press fitting. Also, a resolver stator 44B that constitutes the resolver 34, is fixed in the support hole 36. The output of the resolver stator 44B is connected to the terminal of a socket 37 which is protrusively provided on the side of the bracket 5. Furthermore, a socket 38 is protrusively provided on the side of the bracket 5. The terminal of this socket 38 is electrically connected to the terminal 20 through busbar 40.

### Next, the operations of this embodiment are described here.

Firstly, to produce the brushless motor 1, the stator unit 3 and the rotor 6 are separately assembled. The retaining part 12 and the receiving part 13 are formed by plasticity processing in the bottom part 2B of case 2, and the bearing 11 is inserted by press fitting into the retaining part 12. The core plate with the magnetic material punched out is laminated to make the stator core 15. Insulator 16 is attached to the toothed part 18 of the stator core 15. Moreover, the coil 17 is formed by winding 19 wound over the outer periphery of the insulator 16 so as to lie on top of it. When the stator unit 3 is made in this way, the stator unit 3 is inserted by press fitting into the case 2. At this stage, the end 16A of the insulator 16 touches the bottom part 2B of the case 2 after entering the receiving part 13. In contrast, the coil 17 does not touch the bottom part 2B. Thus, a space 13A is formed between the end 16A of insulator 16 and coil 17, and the bottom part 2B. The end of winding 19 is pulled out from the side of opening 2D of the case 2.

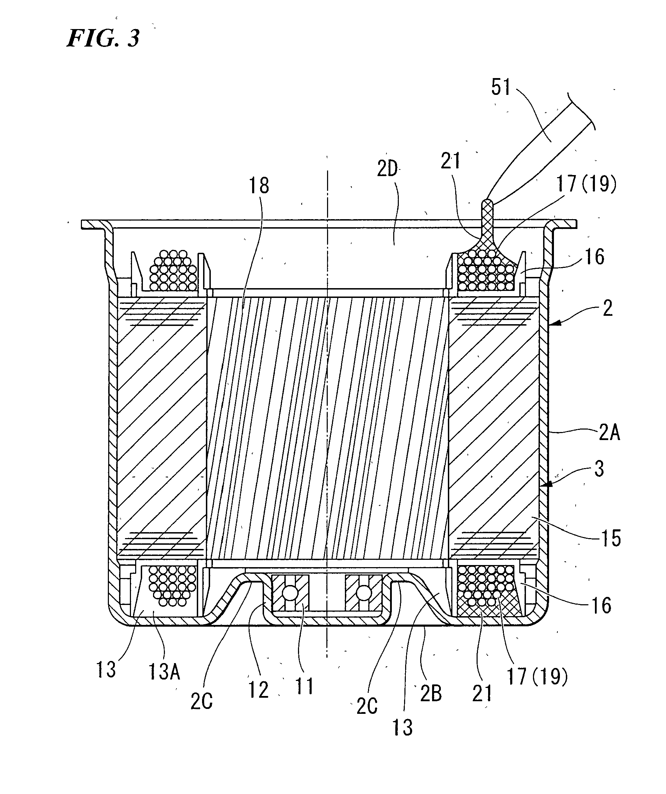

Next, the coil 17 of the stator unit 3 contained in the case 2 is coated. Firstly, as shown in FIG. 3, the opening 2D of the case 2 is disposed facing upward, and then the nozzle 51 is brought close to the upper end of the coil 17. The nozzle 51 is connected to a supply apparatus (not illustrated) for the coating material 21, and the coating material 21 is ejected from the nozzle 51 and poured in the coil 17. High viscosity material is used as the coating material 21. This coating material 21 covers each winding 19 of the coil 17, and also reaches the base of coil 17 through the winding 19. More of the coating material 21 than required is poured so as to cover the coil 17; and therefore, the excess coating material 21 drips into the space 13A of the receiving part 13 from the base of the coil 17 and forms a liquid pool. When the coating material 21 in the space 13A of the receiving part 13 accumulates so as to immerse the base of the coil 17, the pouring of the coating material 21 is stopped, and the coating material 21 is cured. As the result, the coil 17 is covered by the coating material 21 and also the bottom part 2B of the case 2 and the coil 17 are linked through the coating material 21 in the space 13A of the receiving part 13.

At this stage, the end 16A of the insulator 16 is butted against the bottom part 2B, the coating material 21 almost never flows out. Consequently, the coating material 21 does not overflow from the receiving part 13, and does not immerse the bearing 11 that has been inserted by press fitting into the retaining part 12. Also, as shown in FIG. 3, the wedge 25 has closed off the opening of the inner peripheral side between the toothed parts 18, and therefore, the coating material 21 does not flow over to the inner peripheral side.

After the coating material 21 is cured, the winding 19 of the coil 17 is fitted to the terminal 20. Next, the terminal 20 is fixed to the case 2 and the stator 4 is completed. Although the toothed part 18 of the stator 4 is skewed with respect to the axial line in FIG. 3, the toothed part 18 may not necessarily be skewed.

During assembly of the rotor 6, after fixing the permanent magnet 31 to the rotating shaft 30, the magnet cover 32 is attached. After fixing the resolver rotor 34A on the side at the other end of the rotating shaft 30, the other end of the rotating shaft 30 is rotatively supported on the bearing 35 inserted by press fitting into the bracket 5. Furthermore, one end of the rotating shaft 30 of the rotor 6 is pivotably supported on the bearing 11 that is inserted by press fitting into the bottom part 2B of the case 2, and the bracket 5 is attached to the case 2 by screws. Then, the resolver stator 44B and the terminal of the socket 37 are electrically connected, and when the terminal 20 is electrically connected to the busbar 40 of the bracket 5, the brushless motor 1 is completed.

To use the brushless motor 1, each of the sockets 37, 38, is connected to the control unit (not illustrated), and current is passed through the specified coil 17 through the busbar 40 and terminal 20 from the socket 38, according to the rotating position of the rotor 6 detected by the resolver 34. The result is that the rotor 6 rotates because of the magnetic circuit formed by the stator core 15 and the rotor 6. At this stage, the coating material 21 that connects the coil 17 and the bottom part 2B of the case 2 to suppresses vibration that occurs in the bottom part 2B of the case 2 by the rotation of the rotor 6.

According to the present embodiment, while coating the coil 17, the receiving part 13 is formed in the case 2, and the coating material 21 is poured after insertion of the stator unit 3 by press fitting into the case 2. Therefore, the excess coating material 21 could be contained in the receiving part 13. Consequently, there is no need to cut out the excess part of the coating material after curing it, as was done conventionally. Thus, the work man-hours can be cut down in the production process of brushless motors. Moreover, equipment for cutting out and removing the excess coating material is no longer required. Furthermore, waste treatment after cutting out and removing the coating material is no longer necessary. At this stage, the end 16A of the insulator 16 is butted against the bottom part 2B of the case 2, so the coating material 21 can be prevented from flowing out. Also, since the wedge 25 is provided in the toothed part 18, the coating material 21 does not overflow to the inner peripheral side. In this way, the rotor 6 can be correctly rotated even if coating material 21 of larger quantity than the case of the conventional motor is poured.

Also, the vibrations occurring in the bottom part 2B can be mitigated by fixing the coil 17 to the bottom part 2B of the case 2 through the coating material 21 detained in the receiving part 13, and the performance of the brushless motor 1 can be enhanced. If the case is not used as a magnetic circuit, the thickness of the case can be made smaller to obtain lighter weight. Conventionally, the vibrations occurring during rotation of the rotor in such cases were transmitted to the thin bottom part through the bearing and noise occurred because of resonance. However, according to the present embodiment, even if the case 2 has small thickness, the occurrence of noise due to resonance can be prevented.

It is to be noted that the present invention is not limited to the embodiments mentioned above and can be widely used.
For example, instead of dripping the coating material 21, resinous material such as bulk molding compound (BMC) can be used to mold the coil 17. Moreover, if case 2 is also formed by a resin mold, the man-hours can be cut down, and the parts accuracy can be reduced.
Furthermore, the bottom part 2B of the case 2 can be made of smaller thickness, and the bottom part 2B itself can be given spring characteristics. If made in this way, the coating material 21 in the bottom part 2B and in the receiving part 13 acts like a wave washer, and bearing 11 can be pressurized so that the vibration-resistant characteristics can be further enhanced.

A gap may be provided between the end 16A of the insulator 16 and the bottom part 2B of the case 2. In this case, the height of the groove 2C of the case 2 is set greater than the height of the liquid pool of the coating material 21. In this way, the coating material 21 can be prevented from overflowing the receiving part 13 and from immersing the bearing 11 inserted by press fitting into the retaining part 12. The wedge 25 need not be an essential component; instead of the wedge 25, an insulator may be attached so that the opening on the inner peripheral side of the toothed part 18 may be closed.
The coating material 21 may be poured from the outer periphery of the stator unit 3, and the stator unit 3 and the case 2 may be bonded and fixed by the coating material 21. In this case, the stator unit 3 need not be inserted by press fitting into the case 2; and therefore, high parts accuracy is not required, and an equipment to perform press fitting of the stator unit 3 is not required. Moreover, magnetostriction of the stator core 15 due to press fitting can be prevented.
The receiving part 13 may be formed integral with the bottom part 2B, or it may be formed by a method other than plastic deformation.

### [Industrial applicability]

According to the present invention, the complexity of process accompanying coil coating during the production method of electric motor, the production method of stator constituting electric motor, and the production method of electric motor can be eliminated.

## Claims

1. Electric motor comprising a stator contained in a case that closes one end of the circular-shaped side part of a stator unit having a coil wound on a stator core by an end part, and a rotor rotatively supported in the case; wherein
the end part comprises a receiving part for receiving excess coating material covering the coil.

2. The electric motor according to claim 1 wherein the coil is fixed to the end part through the coating material in the receiving part.

3. Production method of stator of electric motor comprising stator contained in a case that closes one end of the circular-shaped side part of a stator unit having a coil wound on a stator core by an end part, and a rotor rotatively supported in the case, wherein
after accommodating the stator unit in the case, coating material is supplied to cover the coil, and
after collecting the excess coating material in the receiving part included in the end part of the case, the coating material is cured.

4. The production method of electric motor wherein after the production of the stator according to the production method of the stator according to claim 3, the rotor is inserted in the stator, and the rotor is rotatively supported by a bracket covering the opening of the case and by the case.
